# EUROPEAN PATENT APPLICATION

(11) **EP 4 283 077 A2**
(43) Date of publication of application: **29.11.2023**
(21) Application number: 23203034.6
(22) Date of filing: 22.02.2020
(51) Int. Cl.: E05B 17/22

(54) **METHODS AND SYSTEMS FOR AN ACCESS CONTROL SYSTEM USING VISUAL RECOGNITION**

(30) Priority: 22.02.2019 US 201962809416 P; 21.02.2020 US 202016798093
(62) Divisional of application: 20158909.0
(71) Applicant: Sensormatic Electronics LLC, Boca Raton, FL 33487 (US)
(72) Inventor: NEILL, Terrence, Boca Raton, 33487 (US); BOYES, Derek J, Boca Raton, 33487 (US); DONAGHY, Martin J., Boca Raton, 33487 (US); FALIK, Yohay, Boca Raton, 33487 (US); ROZNER, Amit, Boca Raton, 33487 (US)
(74) Representative: Hafner & Kohl PartmbB

(57) **Abstract**

A visual feedback access control device and methods for use thereof. The visual feedback access control device may comprise a camera configured to obtain an image. The visual feedback access control device may also comprise a plurality of light emitting diodes ("LEDs") arranged in a plurality of segments relative to the camera. The visual feedback access control device may also comprise where the plurality segments being individually controllable. The visual feedback access control device may also comprise having the LEDs configured to illuminate upon a received control signal based upon one or more access control trigger events.

## Description

### CROSS REFERENCE TO RELATED APPLICATIONS

This application claims priority to U.S. Patent Provisional Application No. 62/809,416, filed February 22, 2019, the entire contents of which is hereby incorporated in its entirety.

### TECHNICAL FIELD

The present disclosure generally relates to an access control system implementing visual recognition, and in some cases in conjunction with visual and audible feedback, for governing access to a specific location.

### BACKGROUND

An access control system is often used at public and private premises, such as households, commercial buildings, businesses, retail establishments, schools, hospitals and government buildings, to list a few examples. Access control system nodes may be installed at access points of the premises (e.g. front and interior doors of a building) to control access to restricted areas, such as the building itself or to areas within the buildings. The access control system authenticates (or authorizes) an access card or pass held by an individual and then permits individuals with authenticated access cards to access the restricted areas through the access point.

Historically, the main components of the access control system are access card readers and possibly door controllers. The access card readers are often installed at the access points and enabled presentation of credentials to obtain access to the restricted areas. Typically, individuals interact with the access card readers by presenting access cards, such as keycards or contactless smart cards, to the readers. The access card readers read the credential information of the access card, and compare the information against a database of authorized individuals to determine if the individual presenting the access card is authorized to access the restricted areas. If the individual is authorized, then the access card reader might signal the door controller, for example, to unlock doors or not generate alarms.

In view of the foregoing, there is a need to more efficiently and more securely, and in more user friendly manner, control access to restricted areas.

### SUMMARY

The following presents a simplified summary of one or more implementations of the present disclosure in order to provide a basic understanding of such implementations. This summary is not an extensive overview of all contemplated implementations, and is intended to neither identify key or critical elements of all implementations nor delineate the scope of any or all implementations. Its sole purpose is to present some concepts of one or more implementations of the present disclosure in a simplified form as a prelude to the more detailed description that is presented later.

The present disclosure relates to an access control system that implements visual recognition to identify and authenticate an individualin to control access to a restricted area. In some cases, the access control system may further operate in conjunction with visual and audible feedback.

One example implementation relates to a system for an access control device using visual recognition and visual and/or audible feedback. One aspect of the system comprises a camera configured to obtain an image. Another aspect of the system comprises a plurality of light emitting diodes ("LEDs") arranged in a plurality of segments relative to the camera, where the plurality segments are individually controllable to provide a status indication to an individual attempting to enter the restricted area. In another aspect of the system, the LEDs are configured to illuminate upon a received control signal based upon one or more access control trigger events.

Additional advantages and novel features relating to implementations of the present disclosure will be set forth in part in the description that follows, and in part will become more apparent to those skilled in the art upon examination of the following or upon learning by practice thereof.

### DESCRIPTION OF THE FIGURES

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advances thereof, will be best understood by reference to the following detailed description of illustrative aspects of the disclosure when read in conjunction with the accompanying drawings, wherein:
FIG. 1A illustrates a schematic view of an example operating environment of an access control system implementing visual recognition, including an example front view a user attempting to access a location via a door, and also including an inset example side view of an alternative operating environment similarly including a user attempting to access a location via a door, in accordance with aspects of the present disclosure;
FIG. 1B is a schematic view of another example operating environment of an access control system implementing visual recognition similar to FIG. 1A but further including a person tracking unit in accordance with aspects of the present disclosure;
FIG. 2 is a flowchart of an example method of operation, and interactions between various modules of, the access control system implementing visual recognition, in accordance with aspects of the present disclosure;
FIG. 3 is a front view of an example visual and audible feedback access control device in accordance with aspects of the present disclosure;
FIG. 4 is a front view of an example set of illumination sequences of a visual feedback access control device in accordance with aspects of the present disclosure;
FIG. 5 is a message and data flow diagram of an example method of access control implementing visual recognition in accordance with aspects of the present disclosure;
FIG. 6 is a block diagram of various hardware components and other features of a computer system that may operate the access control system in accordance with aspects of the present disclosure; and
FIG. 7 is a block diagram of various example system components, for use in accordance with aspects of the present disclosure.

### DETAILED DESCRIPTION

This disclosure relates to systems, devices, and methods for managing and controlling access to specific locations by specific users, such as authorized and/or unauthorized users attempting to access secure locations, by determining the identities of users based upon their visual appearance. The present disclosure describes a system having a separate remote sensor device, such as a camera, for obtaining an image of a user and providing visual and/or audible feedback as to state of the access control process (e.g., image acquisition, identity determination, authentication, and/or access determination), and a separate management system for determining both the identity of the user and the access permission level of the identified user.

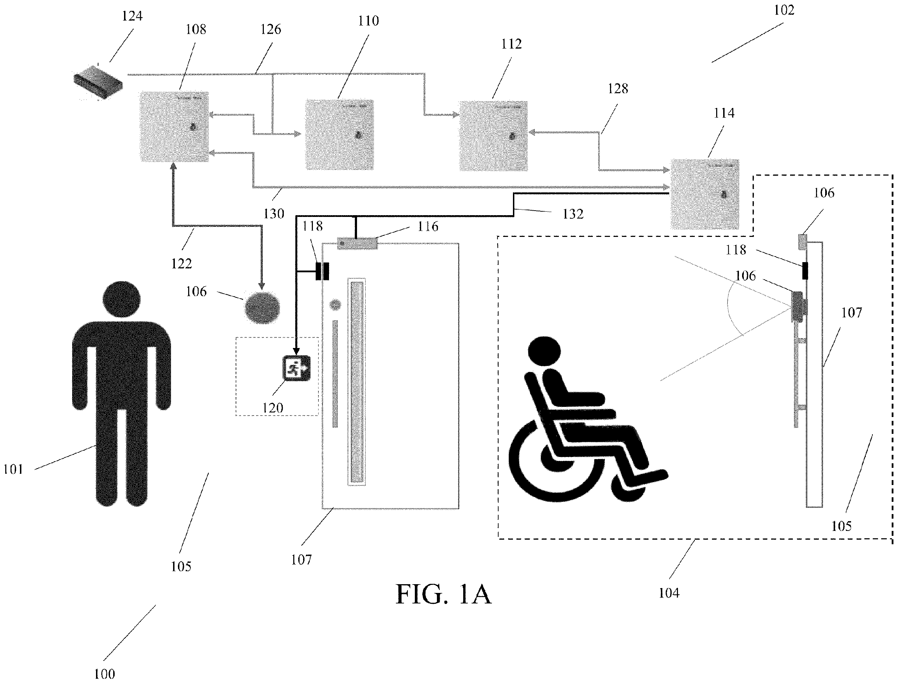

Referring to FIG. 1A, in an example implementation, an operating environment 100 includes an access control system 102 for managing and controlling access to one or more specific locations 105 by one or more specific users 101, by determining the identities of users based upon their visual appearance. The access control system 102 may comprise a sensor 106, such as a camera, that obtains an image of a user 101. In one aspect, the image generated by the sensor 106 may be a video comprising a plurality of image frames, or a single still frame. For example, in one example implementation, the sensor 106 may be located near a door or access point on a wall or ceiling, where a traditional card access reader would be located controlling access. In some implementations, the sensor 106 may comprise a plurality of cameras devices used in conjunction with each other. For example, the first camera device may capture an image of a user 101 comprising their face as they approach the location of the door or access point, while the second camera device may supplement the image obtained by the first camera with liveliness (e.g., the captured image is not a picture, such as based on movement) and/or depth detection information generated by or detectable using one or more additional image frames.

In response to obtaining an image or images, the sensor 106 may transmit the raw data of the image(s) to a control unit 108 via bus 122. In an implementation, bus 126 may be a CAT6 shielded cable or any other suitable bus that provides both data transfer and power to the sensor 106.

The control unit 108 receives the raw data from the sensor 106, and forwards the raw data via bus 126 to a facial recognition server 110. In another example implementation, the control unit 108 may support wired or wireless communication (e.g., Bluetooth^{tm} and/or WiFi, which can allow for multifactor authentication, when implemented in conjunction with facial recognition. Further, bus 126 may also be connected a network switch 124 (*e.g.,* a POE+ switch), allowing broadband capability for remote access.

The facial recognition server (FRS) 110 may receive the raw live video and/or the still image(s) from one or more sensors 106 for processing to determine an identity of the user. The FRS 110 may also perform liveness detection of the users based on the raw live video stream to determine if the users identified are actually alive rather than a decoy, for example, a photograph or a mannequin of a user. Further, in another example implementation, the FRS 110 stores digital representations of facial data entered previously, not actual images of faces. Examples of digital representations of facial data may include, but are not limited to, bitmaps, hashed or other encoded versions of the image data, etc. The FRS 110 may be updated with new or additional digital representations of users via management server 112. In one example implementation, the FRS 110 performs facial recognition on the raw stream obtained from the sensor 106. The FRS 110 may be located in the same location as the sensor 106 and control unit 108, for example, the same building or room, or may be located in a remote location, for example, the cloud or a remote building from the management server 112 and the sensor 106. In one example of operation, the FRS 110 may compare the obtained facial recognition of the raw data stream to the digital representations of faces previously stored in a database to determine whether there is a match. In response to the comparison, the FRS 110 may generate a determination signal indicating if the user is known (*e.g.,* a match with the previously entered facial data is found or determined within a threshold level of confidence) or unknown. In another example implementation, the FRS 10 may not generate a determination signal if the user is unknown in the database. In another example implementation, the generated determination signal may further comprise a confidence score. The FRS 110 may transmit the generated determination signal to the control unit 108 and/or the management server 112 via bus 126.

The management server 112, described in detail below, may also receive the determination signal via the bus 126. The management server 112 may log/record the determination signal; for example, the comparison results may be logged/recorded, the confidence score may be logged/recorded, the time and/or date the comparison was performed may be logged/recorded, the decision by the FRS 110 may be logged and/or recorded, and/or the identity of the user may be logged/recorded. The management server 112 may be located in the same location as the sensor 106 and control unit 108, for example, the same building or room, or may be located in a remote location, for example, the cloud or a remote building from the management server 112 and the sensor 106.

Referring back to the control unit 108, the FRS 110 may transmit the determination signal via bus 126 to the control unit 108, which may operate to control access to the . The control unit 108 may transmit the determination signal to an access device 114 via bus 130. In one example implementation, the control unit 108 may support Bluetooth and/or WiFi communications, which may allow other types of multifactor authentication. In one example implementation, the control unit 108 may transmit an indication signal back to the sensor 106 via bus 122. The sensor 106 may pass indications to the user at the location of the sensor 106 via lights and/or sound. The visual or light-based indications will discussed in detail below. In one example implementation, control unit 108 may exchange messages with access device 114 via bus 130, wherein such communication messages may be in a particular protocol, for example, Open Supervised Device Protocol (OSDP) and Wiegand. The access device 114 may store access control information. The access control information may include if a user is allowed access to a specific location. For example, the access device 114 may store information indicating that a known user, e.g., user A, is permitted to access a specific location. Further, the access control information may be stored as a lookup table comprising information on specific users and the specific locations for which they may be allowed access.

The management server 112 may supply the access data stored in the control device 114 via bus 128. The access data may be updated on a specific schedule, for example, every day, or may be updated when new information is placed in the management server 112. In another example implementation, the access data may be stored solely on the management server 112, or shared between the management server 112 and the control device 114. For example, the access device 114 may receive the determination signal via bus 130 that indicates that user A is recognized and identified, as described above. The access device may attempt to determine if user A has access to location B via the access data stored in the device, or request the data from the management server 112. In one example implementation, the data may be stored on the access device 114 to ensure access to specific locations if the bus 128 is cut, disconnected or damaged. Upon determination to grant or deny access to an identified user, an output signal is transmitted via bus 132 and 130 indicating the access status of the identified user.

The control unit 108 may receive the output signal via bus 130 comprising the access status indicating if the identified user has been granted access or denied access to a specific location. In one example implementation, the control unit 108 may transmit the output signal back to the sensor 106 via bus 122. The sensor 106 may output indications to the user at the location of the sensor 106 via lights and/or sound based on the output signal. The visual indications and audible indications will discussed in detail below.

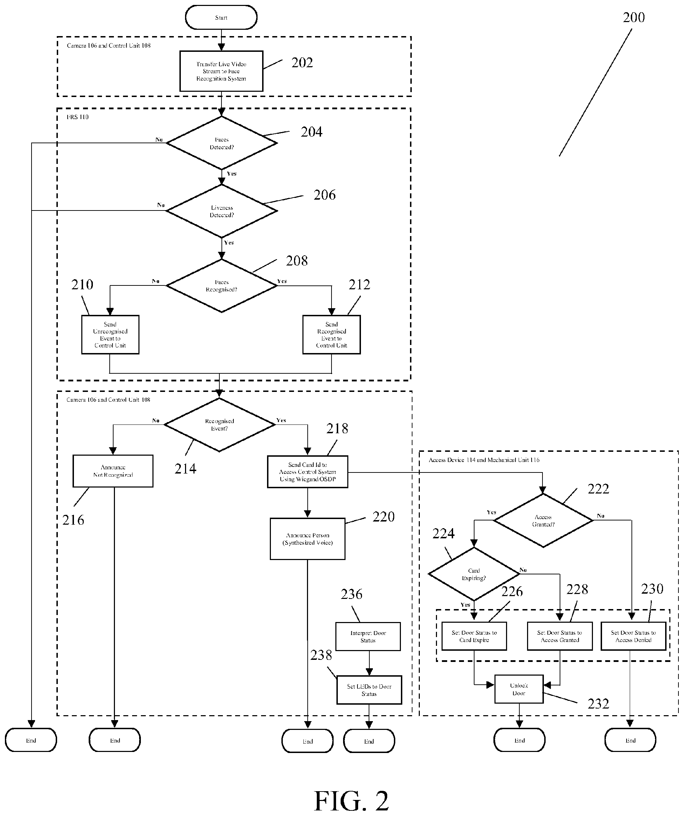

The access control system may further include a controllable locking unit 116, for example attached to a door hinge, frame, door knob, handle, lock, or another feature of a door or structure removably blocking access to the location 105. The locking unit 116 may receive the output signal, via bus 132, where the output signal includes an access status indicating if the identified user has been granted access or denied access to the location 105. For example, the locking unit 116 may be an electronically controllable mechanical actuator that can be controlled to move between a locked position and an unlocked position. In one example implementation, if the user has been identified, as described above, and has been granted access to the location 105 via the control device 114, the locking unit 116 unlocks the door 107 to enable the user 101 to access the location 105. In an example, implementation, a door sensor 118 may be used to determine if the door 107 has been opened, closed, how long the door 107 has been opened and how long the door 107 has been closed, in order to make subsequent access-related decisions. For example, the locking unit 116 may not unlock the door again if the door has not yet been determined to be closed via door sensor 118. Further, an emergency opening device 120 may be present on the reverse side of the door. The emergency opening device 120 may be triggered by a user 101 in an emergency to immediately unlock the door via the locking unit 116. Further details regarding an example method of operation of the system illustrated in FIG. 1A will be described below with reference to FIG. 2.

In a further example implementation, operating environment 104 includes the same features described above, but further illustrates the comprehensive operating abilities of the sensor 106, e.g., being able to detect and make access decisions for all types of users.

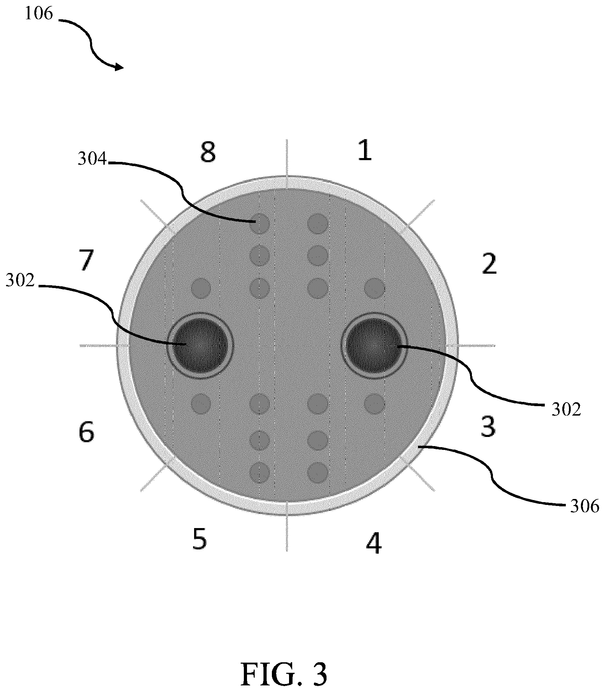

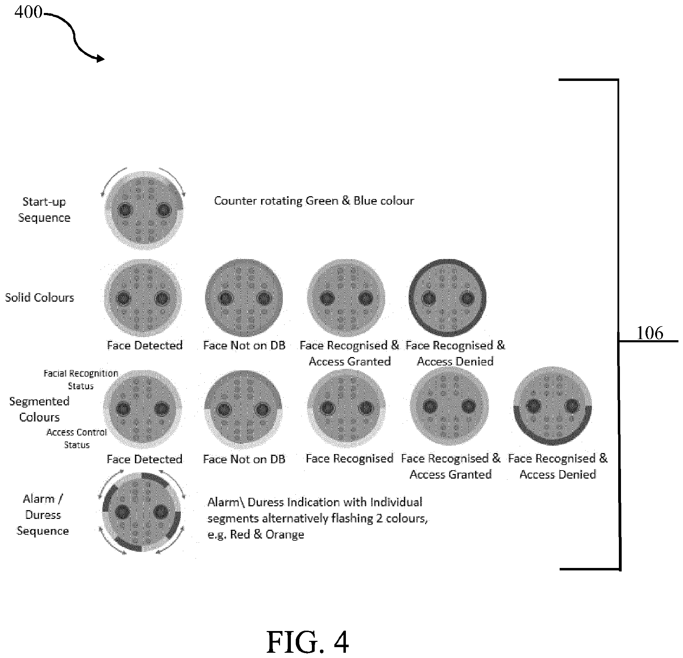

The structure and configuration of the sensor 106 is described in detail below with reference to FIG. 3 and FIG. 4.

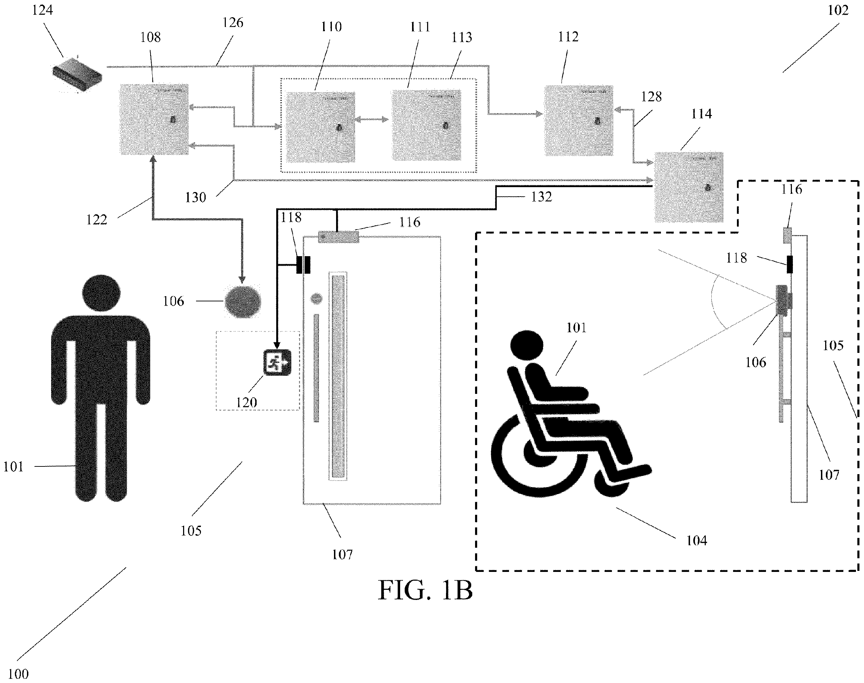

Referring to FIG. 1B, in another example implementation, the operating environment 100 includes access control system 102 for managing and controlling access to specific locations by specific users, by determining the identities of users based upon their visual appearance according to an aspect of the disclosure. As described above with reference to FIG. 1A, the same aspects are illustrated in FIG. 1B. In one aspect of the invention, the FRS 110 further interacts with a person-tracking unit 111. The person-tracking unit 111 may further comprise a person tracking system, a person re-identification system and a video recording system. These three systems may all be placed within the person-tracking unit 111, or separated into discrete components interacting with the person-tracking unit 111. Together, the FRS 110 and the person-tracking unit 111 may be referenced as the tracking system 113. In one example implementation, rather than using facial recognition alone, as described above, a user may be further identified based on the images captured from sensor 106, for example, the clothes that they are wearing, their physical proportions, and/or other non-biometric data particular to the user. Working in conjunction with the FRS 110 and the person-tracking unit 111, the tracking system 113 may provide improved user validation for the access control system 102.

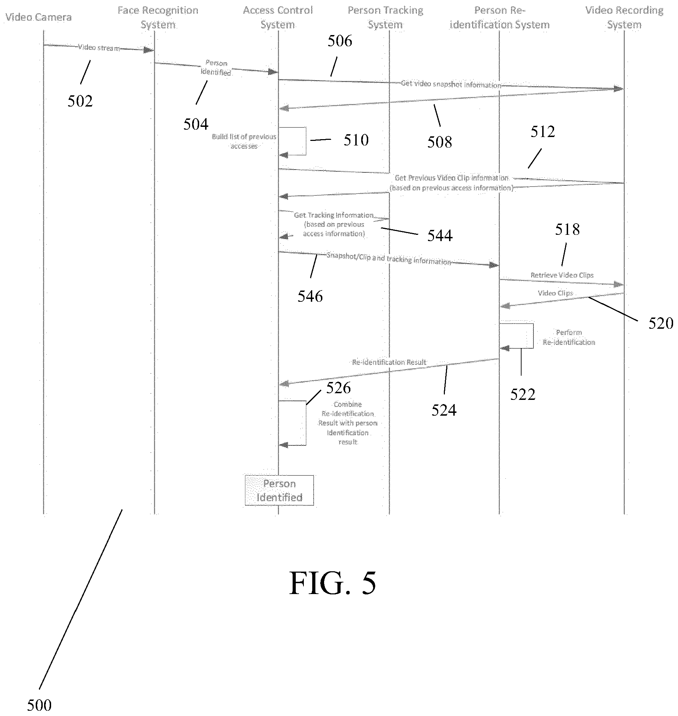

As described above, the sensor 106 may supply a live raw video stream to the tracking system 113. The live raw video stream may be generated by sensor 106 at a specific location, or all cameras 106 from various locations within a building/location. A video recording system (not shown) may record the video from all cameras 106 supplying live raw video streams. The FRS 110 may analyze the live raw video and provide an output containing the identified user or users in the live video. As described above, the output may also contain a confidence level. The person-tracking unit 111 will also analyze the live raw video stream provided by the sensor 106 by comparing the live raw video with stored historical video. The person-tracking unit 111 may provide an output containing the identified user or users in the live video. The output from the person-tracking unit 111 may also contain a confidence level of such determination. In one example implementation, the person-tracking unit 111 may also store the video, the location and/or time that a user is identified as the historical data. The outputs from the FRS 110 and the person-tracking unit 111 may be combined to produce a more accurate identification result, or allow a user to be positively identified with a higher confidence store than with facial recognition alone. In one example implementation, when facial information is not complete, for example, partially obscured or from a longer distance away, the tracking system 113 may still provide identification information with a confidence score based on a previous, higher confidence identification in combination with matching one or more characteristics associated with the previous identification, e.g., a particular size, shape, and/or color of an article of clothing. The method of the system illustrated in FIG. 1B will be described below with reference to FIG. 5.

Referring to FIG. 2, an example of a method 200 of the operation of and interactions between various modules of the access control system implementing visual recognition is explained in accordance with one implementation. FIG. 1A and 1B may be referenced in combination with the flowchart of FIG. 2. To start, method 200 includes a user attempting to access a specific access control location, as described above. At step 202, the sensor 106, *e.g.,* a camera, may generate the raw live video stream and transmit the raw video steam to the control unit 108. The FRS 110 receives the raw video steam at step 204 and determines if facial data can be determined, as described above. If the user's face is not detected the method ends. If the user's face is detected, liveness is determined at step 206. If the user does not exhibit liveness, the method ends. If the user is exhibits liveness the FRS 110 attempts to identify the user at step 208. If the user is not identified by the FRS 110, a signal is sent to the control unit 106 at step 210. If the user is identified by the FRS 110, a signal is sent to the control unit 106 at step 212

At step 214, the control unit 108 determines if the user is identified by the FRS 110. If the user is not identified, a signal is sent to the sensor 106 at step 216. The sensor 106 receives the signal sent at step 216 and may be configured to provide a visual and/or audible alert to the user at the access location, as described below. If the user is identified, a signal is sent to the sensor 106 and the access device 114 at step 218. The sensor 106 receives the signal sent at step 220 and may be configured to provide a visual and/or audible alert to the user at the access location, as described below. Further, the access device 114 receives the signal transmitted during step 218. At step 222 the access device determines if the identified user is granted or denied access to a specific location. If the user is denied access, the locking unit 116 does not unlock the door. Further, (not shown) a signal may be sent to the sensor 106 at step 230 for signal interpretation at step 236. The sensor 106 may receive the signal sent at step 230 and may be configured to provide a visual and/or audible alert to the user at the access location, as described below. If the user is granted access, the access device 114 determines if the user's credentials are expiring soon at step 224. If the user's credentials are expiring soon, a signal is sent to the locking unit 116 at step 226. If the user's credentials are not expiring soon, a signal is sent to the locking unit 116 at step 228. At step 232 the locking unit 116 unlocks the door at the access point. Further, (not shown) a signal may be sent to the sensor 106 at step 232 for signal interpretation at step 236. The sensor 106 may receive the signal sent at step 232 and may be configured to provide a visual and/or audible alert to the user at the access location, as described below.

At step 236, the control unit 108 determines the illumination sequence of the sensor 106, described below, based on at least a signal indicating user identification, access determination and face determination. At step 238, the camera illuminates the LEDs in a specific illumination sequence based on the system determinations, described below.

Referring to FIG. 3, an example visual feedback access control device includes the sensor 106, as referenced above, which may contain a plurality of segments of a light ring 306. Each of the plurality of segments of the light ring 306 may comprise a plurality of light emitting diodes (LEDs). The LEDs, for example, may be a single LED device containing one red, green, and blue (RGB) LEDs. In one example implementation, sensor 106 of FIG. 3 may comprise 8 segments, each of the 8 segments of the light ring 306 may each contain at least one LED. The illumination of the light ring 306 and the plurality of segments is described below with reference to FIG. 4. In one example implementation the sensor 106 may comprise a plurality of sensor devices 302. As described above, the one or more sensor devices 302 may be a video camera, or a still camera that captures a plurality if images. In another example implementation, the sensor 106 may alternatively or additionally comprise a plurality of infrared (IR) illumination units 304. The IR illumination units 304 may detect infrared energy (heat) and convert the detected heat into an electronic signal, which is then processed to produce a thermal image. In another example implementation, the IR units 304 may aid in night time illumination and also provide illumination in the day time to improve the facial data gathered for recognition. As illustrated in FIG. 3, for example, 16 separate IR illumination units are present, but this implementation is not limiting and it should be understood that any number of IR illumination units may be present.

In one example implementation the sensor 106 may also comprise a speaker and a microphone (not shown). The speaker and the microphone may be configured to work as an intercom systems. In an implementation, for example, the speaker and microphone may communication with other components of the system using a communication protocol, such as but not limited to the Session Initiation Protocol (SIP). In one example implementation, the speaker may be configured to generate alerts for a user attempting to access a specific location, for example, providing audible alerts that their image has been captured, the user has been identified, the user has been granted access to the specific location, the user has been denied access, the user has not been identified, and the like. For example, the audible alerts may be implemented with a synthesized voice or play an audio file to the user. Bus 122 in FIG. 1A and 1B, as described above, my provide a signal generate the alerts. In another example implementation, the microphone may provide audible communications to employees that manage operation of the system, for example, a two-way communication between the user 106 and an employee operating the system to discuss reasons for the user's denial of access to a specific location, requesting additional information from the user, or the like. In another example implementation the speaker and/or microphone of the sensor 106 may provide audible alerts and communication regarding an alarm or duress situation.

Referring to FIG. 4, an example set of access control device illumination sequences 400 include one or more illumination sequences that may be output by the sensor 106 to provide an indication too the user, e.g., of a status of their attempted access. The sensor 106, as referenced above, may contain a plurality of segments of a light ring 306 as described above in reference to FIG. 3. As described above, the sensor 106 may receive signals via bus 122 referenced in FIG. 1A and FIG. 1B. The signals may instruct the sensor 106 to illuminate the segments in different illumination sequences 400 based on one of a plurality of trigger events. For example, some trigger events may be: an image being successfully obtained by the sensor 106; the device being in a start-up state; the image being a match with one of a plurality of known images in a database when compared by the FRS 110; the image not being the match with any of the plurality of known images in the database of the FRS 110; the image being the match with the one of the plurality of known images in the database of the FRS 110 but not having an access permission to a specific location based on the management server 112; the image being the match with the one of the plurality of known images in the database of the FRS 110 and having the access permission to the specific location based on the management server 112; or an alarm/duress event. The illumination sequences 400 generated by the LEDs, for example, may be rotating green and blue colors; solid colors such as all yellow, all blue, all green all red; only the top half with solid colors; only the bottom half with solid colors; or flashing colors. Any color may be associated with any illumination sequence and with any trigger event. For example, each trigger event may have a respective preprogrammed illumination sequence, or each trigger event may be user selected.

Referring to FIG. 5, an example message and data flow 500 of a method of access control performed by an access control system implementing visual recognition may reference the aspects described above with reference to FIG. 1B. In one example, a user approaches an access point, and the user will be visible in the video stream from the sensor 106 associated with a specific access point. At step 502 the sensor 106 generates and transmits the raw video stream to the FRS 110. At step 504, the FRS 110 identifies a user and transmits the identification information of the user to the to the person tracking unit 111. For example, the FRS 110 will attempt to identify a user approaching the access point by using the live raw video feed from the sensor 106. The tracking system 113 will also record the time and position information for the identified user approaching the access point. Once the user is identified, the management server 112 will be notified, as described above. At step 506, the person tracking unit 111 requests the video information from the video recording system. At step 508, the video recording system supplies the video information to the person tracking unit 111. At step 510, the person tracking unit 111 receives a list of previous accesses of the access location by the user from the management server 112. For example, the management server 112 queries its database and assembles a list of accesses for all access points that the identified user has had over a specified period. At step 512, the person tracking unit 111 requests and receives video clips from the video recording system showing the user accessing the location. At step 514, the tracking system attempts to find tracking information of the identified user in each of the supplied video clips. At step 516, the identified video clip information, the previous identified video clip information and tracking information are sent to the person re-identification system. At steps 518 and 520, the person re-identification system will request and receive requested video clips and at step 524, the person re-identification system provides an assessment of how alike the current image of the identified user is verse the previous images of the identified user. At step 526, the tracking system 113 combines the output from the FRS 110 and the output from the person tracking unit 111 to determine whether the user is accurately identified.

In one example implementation, the determination of if a user is identified may be based upon a comparison to a threshold. For example, by combining the FRS 110 output, indicating user A with a confidence score of 98%, and the person tracking unit 111 output, indicating user A with a confidence score of 80%, then a user is considered to be identified. In another example, by combining the FRS 110 output, indicating user A with a confidence score of 70%, and the person tracking unit 111 output, indicating user A with a confidence score of 90%, then a user is considered to be identified.

In one example implementation, some algorithms implemented by the tracking unit 111 to re-identify the user may have a high dependency on what a user is wearing, and this may change from day-to-day. To mitigate against this, the selection criteria for the video clips used for person re-identification system may be changed to include, for example, only clips for the current day or only video clips since the person entered the building. Implementing these types of criteria would enforce a rule that initial access to the location or building would require a positive identification of a person by facial recognition only, but access within the building would allow use of both the FRS 110 and the tracking unit 111.

In another example implementation, the combination of the output from the FRS 110 and the output from the person tracking unit 111 may take into consideration a change of clothes during the same day (e.g., removed a big coat) by a user. For example, when both outputs have high confidence, the person will be granted access very quickly and from a further distance to the access point. When the person tracking unit 111 output confidence score is low the system will wait until it gets a high FRS 110 confidence score since the person may have changed their clothes. The tracking unit 111 may store all the different attributes of the same user when entering different access points, and the confidence of a new access will be based on a previous access where the attributes most resemble the current one, for example, when the user wore the same clothes.

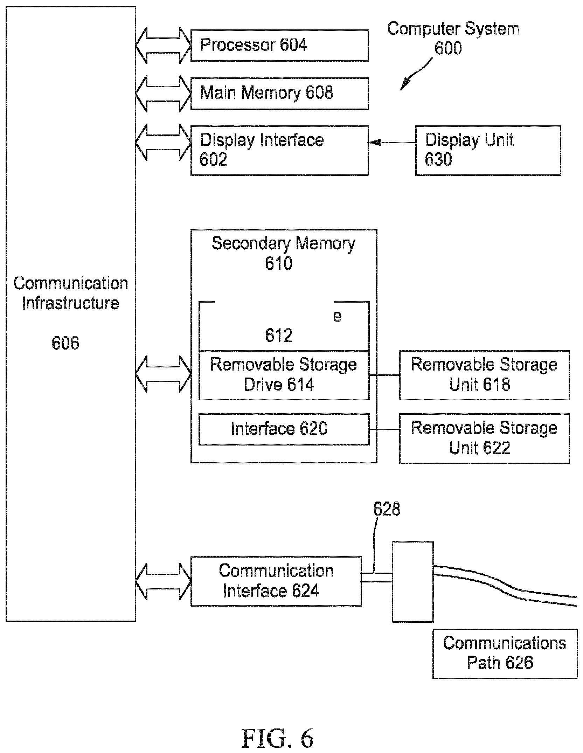

Aspects of the present disclosure may be implemented using hardware, software, or a combination thereof and may be implemented in one or more computer systems or other processing systems. In one aspect, the disclosure is directed toward one or more computer systems capable of carrying out the functionality described herein. FIG. 6 presents an example system diagram of various hardware components and other features that may be used in accordance with aspects of the present disclosure. Aspects of the present disclosure may be implemented using hardware, software, or a combination thereof and may be implemented in one or more computer systems or other processing systems. In one example variation, aspects of the disclosure are directed toward one or more computer systems capable of carrying out the functionality described herein. An example of such a computer system 600 is shown in FIG. 6.

Computer system 600 includes one or more processors, such as processor 604. The processor 604 is connected to a communication infrastructure 606 (e.g., a communications bus, crossover bar, or network). Various software aspects are described in terms of this example computer system. After reading this description, it will become apparent to a person skilled in the relevant art(s) how to implement aspects of the disclosure using other computer systems and/or architectures.

Processor 604, or any other "processor," as used herein, processes signals and performs general computing and arithmetic functions. Signals processed by the processor may include digital signals, data signals, computer instructions, processor instructions, messages, a bit, a bit stream, or other computing that may be received, transmitted and/or detected.

Communication infrastructure 606, such as a bus (or any other use of "bus" herein, such as bus 122, 126, 128, 130, and/or 132 as discussed above), refers to an interconnected architecture that is operably connected to transfer data between computer components within a singular or multiple systems. The bus may be a memory bus, a memory controller, a peripheral bus, an external bus, a crossbar switch, and/or a local bus, among others. The bus may also be a bus that interconnects components inside a access control system using protocols, such as Controller Area network (CAN), Local Interconnect Network (LIN), Wiegand and Open Supervised Device Protocol (OSDP) among others.

Further, the connection between components of computer system 600, or any other type of connection between computer-related components described herein may be referred to anoperable connection, and may include a connection by which entities are operably connected, such that signals, physical communications, and/or logical communications may be sent and/or received. An operable connection may include a physical interface, a data interface and/or an electrical interface.

Computer system 600 may include a display interface 602 that forwards graphics, text, and other data from the communication infrastructure 606 (or from a frame buffer not shown) for display on a display unit 630. Computer system 600 also includes a main memory 608, preferably random access memory (RAM), and may also include a secondary memory 610. The secondary memory 610 may include, for example, a hard disk drive 612 and/or a removable storage drive 614, representing a floppy disk drive, a magnetic tape drive, an optical disk drive, etc. The removable storage drive 614 reads from and/or writes to a removable storage unit 618 in a well-known manner. Removable storage unit 618, represents a floppy disk, magnetic tape, optical disk, etc., which is read by and written to removable storage drive 614. As will be appreciated, the removable storage unit 618 includes a computer usable storage medium having stored therein computer software and/or data.

In alternative aspects, secondary memory 610 may include other similar devices for allowing computer programs or other instructions to be loaded into computer system 600. Such devices may include, for example, a removable storage unit 622 and an interface 620. Examples of such may include a program cartridge and cartridge interface (such as that found in video game devices), a removable memory chip (such as an erasable programmable read only memory (EPROM), or programmable read only memory (PROM)) and associated socket, and other removable storage units 622 and interfaces 620, which allow software and data to be transferred from the removable storage unit 622 to computer system 600.

It should be understood that a memory, as used herein may include volatile memory and/or non-volatile memory. Non-volatile memory may include, for example, ROM (read only memory), PROM (programmable read only memory), EPROM (erasable PROM) and EEPROM (electrically erasable PROM). Volatile memory may include, for example, RAM (random access memory), synchronous RAM (SRAM), dynamic RAM (DRAM), synchronous DRAM (SDRAM), double data rate SDRAM (DDR SDRAM), and/or direct RAM bus RAM (DRRAM).

Computer system 600 may also include a communications interface 624. Communications interface 624 allows software and data to be transferred between computer system 600 and external devices. Examples of communications interface 624 may include a modem, a network interface (such as an Ethernet card), a communications port, a Personal Computer Memory Card International Association (PCMCIA) slot and card, etc. Software and data transferred via communications interface 624 are in the form of signals 628, which may be electronic, electromagnetic, optical or other signals capable of being received by communications interface 624. These signals 628 are provided to communications interface 624 via a communications path (e.g., channel) 626. This path 626 carries signals 628 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive 680, a hard disk installed in hard disk drive 670, and signals 628. These computer program products provide software to the computer system 600. Aspects of the disclosure are directed to such computer program products.

Computer programs (also referred to as computer control logic) are stored in main memory 608 and/or secondary memory 610. Computer programs may also be received via communications interface 624. Such computer programs, when executed, enable the computer system 600 to perform various features in accordance with aspects of the present disclosure, as discussed herein. In particular, the computer programs, when executed, enable the processor 604 to perform such features. Accordingly, such computer programs represent controllers of the computer system 600.

In variations where aspects of the disclosure are implemented using software, the software may be stored in a computer program product and loaded into computer system 600 using removable storage drive 614, hard drive 612, or communications interface 620. The control logic (software), when executed by the processor 604, causes the processor 604 to perform the functions in accordance with aspects of the disclosure as described herein. In another variation, aspects are implemented primarily in hardware using, for example, hardware components, such as application specific integrated circuits (ASICs). Implementation of the hardware state machine so as to perform the functions described herein will be apparent to persons skilled in the relevant art(s).

In yet another example variation, aspects of the disclosure are implemented using a combination of both hardware and software.

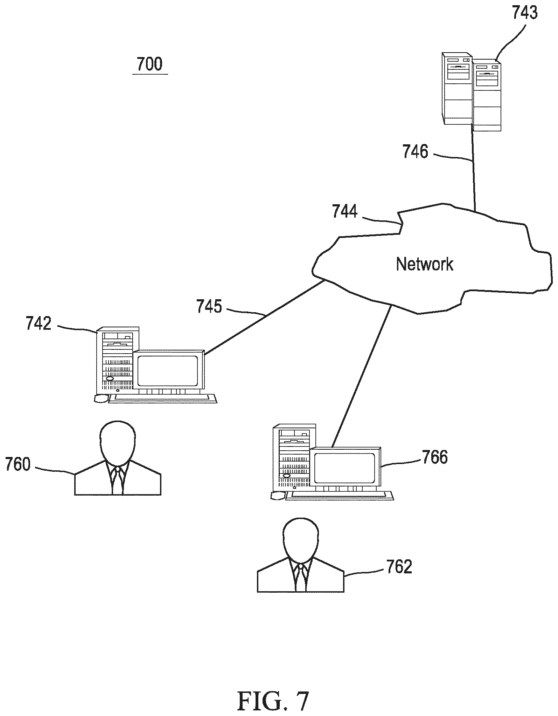

FIG. 7 is a block diagram of various example system components that may be used in accordance with aspects of the present disclosure. For example, the various components may be within the operating environment 100, or only some of the components may be within the access control system 102, and other components may be remote from the access control system 102. The system 700 includes one or more accessors 760, 762 (also referred to interchangeably herein as one or more "users" or persons seeking to gain access to a location) and one or more terminals 742, 766 (such terminals may be or include, for example, various features of the access control system 102). In one aspect, data for use in accordance with aspects of the present disclosure is, for example, input and/or accessed by accessors 760, 762 via terminals 742, 766, such as personal computers (PCs), minicomputers, mainframe computers, microcomputers, telephonic devices, or wireless devices, such as personal digital assistants ("PDAs") or a hand-held wireless devices coupled to a server 743, such as a PC, minicomputer, mainframe computer, microcomputer, or other device having a processor and a repository for data and/or connection to a repository for data, via, for example, a network 744, such as the Internet or an intranet, and couplings 745, 746, 764. The couplings 745, 746, 764 include, for example, wired, wireless, or fiber optic links. In another example variation, the method and system in accordance with aspects of the present disclosure operate in a stand-alone environment, such as on a single terminal.

The aspects of the disclosure discussed herein may also be described and implemented in the context of computer-readable storage medium storing computer-executable instructions. Computer-readable storage media includes computer storage media and communication media. For example, flash memory drives, digital versatile discs (DVDs), compact discs (CDs), floppy disks, and tape cassettes. Computer-readable storage media may include volatile and nonvolatile, removable and non-removable media implemented in any method or technology for storage of information such as computer readable instructions, data structures, modules or other data.

It will be appreciated that various implementations of the above-disclosed and other features and functions, or alternatives or varieties thereof, may be desirably combined into many other different systems or applications. Also that various presently unforeseen or unanticipated alternatives, modifications, variations, or improvements therein may be subsequently made by those skilled in the art which are also intended to be encompassed by the following claims.

Various aspects and embodiments of the invention are specified in the following clauses:
1. A visual feedback access control device, comprising:
   a camera configured to obtain an image; and
   a plurality of light emitting diodes ("LEDs") arranged in a plurality of segments relative to the camera, the plurality segments being individually controllable;
   wherein the LEDs are configured to illuminate upon a received control signal based upon one or more access control trigger events.
2. The visual feedback access control device of clause 1, wherein the one or more access control trigger events include:
   the image being successfully obtained by the camera;
   the device being in a start-up state;
   the image being a match with one of a plurality of known images in a database;
   the image not being the match with any of the plurality of known images in the database;
   the image being the match with the one of the plurality of known images in the database but not having an access permission to a specific location;
   the image being the match with the one of the plurality of known images in the database and having the access permission to the specific location; or
   an alarm/duress event.
3. The visual feedback access control device of clause 2, further comprising a speaker configured to produce an audible output in response to the trigger event comprising the alarm/duress event.
4. The visual feedback access control device of clause 1, wherein the plurality of segments comprising the LEDs are configured to be illuminated one at a time or in one or more combinations based on a corresponding one of the one or more trigger events.
5. The visual feedback access control device of clause 1, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.
6. The visual feedback access control device of clause 5, wherein each illuminated pattern is produced in a plurality of colors.
7. The visual feedback access control device of clause 6, wherein each trigger event correlates to a specific one of the plurality of illuminated patterns in a specific illuminated color.
8. The visual feedback access control device of clause 1, wherein each of the plurality of segments comprises at least one red, green, and blue (RGB) LEDs.
9. An access control system, comprising:
   the visual feedback access control device of clause 1;
   a control unit configured to receive the image, forward the image for facial recognition, receive a determination signal that indicates whether the image is associated with an identified user, and generate the control signal based on the identification information.
10. The access control system of clause 9, further comprising an access control device configured to determine when the identified user has been granted access to a location and generating an open signal.
11. The access control system of clause 10, further comprising a locking unit movable between a locked and unlocked position based on the open signal.
12. The access control system of clause 11, wherein when the user is identified but is not granted access to a location, the locking unit remains in the locked position.
13. A method for providing visual feedback for an access control device, comprising steps of
   obtaining an image; and
   illuminating a plurality of light emitting diodes ("LEDs") arranged in an plurality of segments relative to a camera, upon a received control signal based upon one or more access control trigger events,
   wherein the plurality segments being individually controllable.
14. The method of clause 13, wherein the one or more access control trigger events include:
   the image being successfully obtained by the camera;
   the device being in a start-up state;
   the image being a match with one of a plurality of known images in a database;
   the image not being the match with any of the plurality of known images in the database;
   the image being the match with the one of the plurality of known images in the database but not having an access permission to a specific location;
   the image being the match with the one of the plurality of known images in the database and having the access permission to the specific location; or
   an alarm/duress event.
15. The method of clause 14, further comprising producing an audible output from a speaker in response to the trigger event comprising the alarm/duress.
16. The method of clause 15, wherein the plurality of segments comprising the LEDs are configured to be illuminated one at a time or in one or more combinations based on a corresponding one of the one or more trigger events.
17. The method of clause 16, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.
18. The method of clause 17, wherein each illuminated pattern is produced in a plurality of colors.
19. The method of clause 18, wherein each trigger event correlates to a specific one of the plurality of illuminated patterns in a specific illuminated color.
20. The method of clause 13, wherein each of the plurality of segments comprises at least one red, green, and blue (RGB) LEDs.

## Claims

1. An access control system (102), comprising:
one or more sensors (106) configured to obtain an image of a user (101); and
a control unit (108), wherein the one or more sensors (106) are configured to transmit raw data of the image to the control unit (108);
wherein the control unit (108) is configured to receive the raw data from the sensor (106), and forward the raw data to a facial recognition server (110),
wherein the facial recognition server (110) is configured to receive the raw live video and/or the still image(s) from one or more sensors (106) for processing to determine an identity of the user or to perform liveness detection of the user to determine if the users identified are actually alive;
wherein the facial recognition server (110) is configured to transmit the determination to the control unit (108) which is configured to determine one or more access control trigger events based upon the determination; or
wherein the facial recognition server (110) is configured to interact with a person-tracking unit (111).

2. The system of claim 1, wherein the the person-tracking unit (111) further comprises a person tracking system, a person re-identification system and a video recording system.

3. The system of claim 1, wherein the one or more access control trigger events include:
the image being successfully obtained by the one or more sensors;
the device being in a start-up state;
the image being a match with one of a plurality of known images in a database;
the image not being the match with any of the plurality of known images in the database;
the image being the match with the one of the plurality of known images in the database but not having an access permission to a specific location;
the image being the match with the one of the plurality of known images in the database and having the access permission to the specific location; or
an alarm/duress event.

4. The system of claim 1, further comprising a plurality of light emitting diodes ("LEDs") arranged in a plurality of segments relative to the one or more sensors, the plurality segments being individually controllable; wherein the LEDs are configured to illuminate upon a received control signal based upon one or more access control trigger events,
wherein the plurality of segments comprising the LEDs are configured to be illuminated one at a time or in one or more combinations based on a corresponding one of the one or more trigger events.

5. The system of claim 1, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.

6. The system of claim 5, wherein each illuminated pattern is produced in a plurality of colors; wherein each trigger event correlates to a specific one of the plurality of illuminated patterns in a specific illuminated color.

7. The system of claim 1, further comprising an access control device configured to determine when the identified user has been granted access to a location and generating an open signal.

8. The system of claim 7, further comprising a locking unit movable between a locked and unlocked position based on the open signal; wherein optionally, when the user is identified but is not granted access to a location, the locking unit remains in the locked position.

9. A method for operating an access control system (102), particularly an access control system according to claim 1, the method comprising steps of:
obtaining an image;
generating a raw video stream and transmit the raw video steam to a control unit (108),
determining if facial data can be determined, wherein if a face of a specific user is detected, determining liveness, wherein
if it is determined that the user exhibits liveness, identifying the user,
if the user is identified, sending a signal is sent to a control unit; and
determining if the identified user is granted or denied access to a specific location.

10. The method of claim 9, further comprising producing an audible output from a speaker in response to the trigger event comprising the alarm/duress.

11. The method of claim 9, further comprising illuminating a plurality of light emitting diodes ("LEDs") arranged in a plurality of segments relative to a sensor, upon a received control signal based upon one or more access control trigger events,
Wherein the plurality segments being individually controllable,
wherein the plurality of segments comprising the LEDs are configured to be illuminated one at a time or in one or more combinations based on a corresponding one of the one or more trigger events.

12. The method of claim 11, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.

13. The method of claim 12, wherein each illuminated pattern is produced in a plurality of colors; wherein each trigger event correlates to a specific one of the plurality of illuminated patterns in a specific illuminated color.
